Europäisches Patentamt

European Patent Office

Office européen des brevets

(11) Numéro de publication: **0 059 652**
**A1**

(12) # DEMANDE DE BREVET EUROPEEN

(21) Numéro de dépôt: **82400171.3**

(22) Date de dépôt: **02.02.82**

(51) Int. Cl.³: **F 03 B 13/12**

(30) Priorité: **27.02.81 FR 8104375**

(43) Date de publication de la demande:
**08.09.82 Bulletin 82/36**

(84) Etats contractants désignés:
**DE GB NL**

(71) Demandeur: **Dubois, Yves**
**95, avenue Poincaré**
**F-59700 Marcq en Baroeul(FR)**

(71) Demandeur: **Dubois, François**
**13, rue de la Poissonnerie**
**F-22100 Dinan(FR)**

(72) Inventeur: **Dubois, Yves**
**95, avenue Poincaré**
**F-59700 Marcq en Baroeul(FR)**

(72) Inventeur: **Dubois, François**
**13, rue de la Poissonnerie**
**F-22100 Dinan(FR)**

(74) Mandataire: **Lemoine, Jean**
**12, boulevard de la Liberté**
**F-59800 Lille(FR)**

(54) **Dispositif permettant d'utiliser l'énergie de la houle et des vagues.**

(57) Le dispositif est caractérisé par la combinaison:

a) d'un vaisseau ayant des caractéristiques appropriées pour suivre les fréquences habituelles de la houle au lieu d'ancrage considéré et constitué pour s'orienter face à ladite houle pour tanguer et ne pas rouler grâce à des moyens mécaniques l'y aidant;

b) de moyens C, C', au moins à une extrémité du vaisseau, destinés à amortir plus ou moins l'amplitude du tangage;

c) de compartiments étanches K, L, M, N, contenant un liquide;

d) de moyens tels que des turbines (9) alimentées régulièrement, placées sur le trajet du liquide, aptes à en capter l'énergie lorsqu'il se déplace, pour fournir une énergie mécanique sur au moins un arbre tournant (11);

e) de déflecteurs (12), (13) placés aux extrémités de chaque compartiment étanche.

Fig.1

Fig.2

EP 0 059 652 A1

- 1 -

## Dispositif permettant d'utiliser l'énergie de la houle et des vagues

### Domaine technique.

La présente invention concerne un dispositif permettant d'utiliser l'énergie de la houle et des vagues pour produire de l'électricité ou toute autre forme d'énergie utilisable à terre à partir d'un vaisseau ancré qui possède des moyens de production d'énergie et de transmission de celle-ci à la terre ferme.

### Problème posé.

Dans le cadre de la recherche de l'énergie, on sait que, la houle existe presque partout sur les côtes non abritées. Elle a une période plus ou moins grande, suivant la surface des océans, et varie de 6 à 12 secondes.

Il est séduisant d'essayer de capter cette énergie non polluante.

### Etat de la technique antérieure et inconvénients.

Les essais de captage de l'énergie de la houle ne sont pas nouveaux. Ils se regroupent en deux grandes catégories.

1) Ceux qui transforment l'énergie des vagues en variation de pression ou d'équilibre hydrostatique ;

2) Ceux qui convertissent le mouvement ondulatoire en mouvement de rotation ou de bascule d'éléments mécaniques.

A cette catégorie appartiennent les radeaux de Sir Christopher COCKERELL et les canards de Stephen SALTER.

Ces dispositifs restent toujours fragiles vis- à-vis des tempêtes.

La présente invention est destinée à remédier à ces inconvénients.

Exposé de l'invention.

Le dispositif de l'invention consiste à capter l'énergie de la houle et des vagues par l'intermédiaire de fluides liquides, tenus dans des espaces clos, déplacés suivant un mouvement de va-et-vient par le tangage. Ces fluides, de masses très importantes, animés de grandes vitesses, entraînent des roues hydrauliques, des turbines, ou tous autres engins de transformation ou d'utilisation directe de cette énergie.

Plus précisément, le dispositif de l'invention est caractérisé par la combinaison :

a) d'un vaisseau ancré à l'avant, ayant des caractéristiques appropriées pour suivre les fréquences habituelles de la houle au lieu d'ancrage considéré et constitué pour s'orienter face à ladite houle pour tanguer et ne pas rouler grâce à des moyens mécaniques l'y aidant ;

b) de moyens, au moins à une extrémité du vaisseau, destinés à modifier plus ou moins l'amplitude du tangage ;

c) de compartiments étanches contenant un liquide qui se déplace le long du vaisseau à la fréquence du tangage ;

d) de moyens, tels que des turbines placés sur le trajet du liquide, aptes à en capter l'énergie lorsqu'il se déplace, pour fournir une énergie mécanique sur au moins un arbre

0059652

tournant, énergie qui peut être utilisée à entraîner au moins une génératrice électrique ;

e) de déflecteurs placés aux extrémités de chaque compartiment étanche et conçus pour limiter le ressac du liquide lorsque celui-ci arrive en fin de course de descente au fond du compartiment.

Le vaisseau embossé normalement se place convenablement face à la houle et s'y maintient soit à l'aide de propulseurs latéraux à roues à aubes, soit à l'aide de propulseurs de poupe qui poussent latéralement l'arrière du vaisseau d'un côté ou de l'autre.

Une caractéristique intéressante de l'invention réside dans le fait que l'on contrôle l'amplitude du tangage au moyen de cloches disposées verticalement à l'avant et à l'arrière du vaisseau, cloches dans la partie supérieure desquelles on contrôle la pression de l'air.

On peut aussi contrôler l'amplitude du tangage par une masse qui se déplace de façon contrôlée de l'avant vers l'arrière et vice versa.

Dans une première version possible du dispositif de l'invention, on interrompt les compartiments étanches vers le milieu du vaisseau par des compartiments à machines. Ces compartiments peuvent comporter des groupes bulbes dont les pales changent d'orientation à chaque changement d'inclinaison du vaisseau. Ces compartiments peuvent aussi comporter, par turbine, au moins deux larges clapets en amont et en aval de chacune des turbines pour assurer un courant de liquide se déplaçant toujours dans le même sens sur la turbine quel que soit le sens d'écoulement du liquide le long du vaisseau.

Dans une deuxième version, on assigne au liquide 0059652

nement des turbines un circuit passant dans des compartiments de transfert vers l'arrière, des compartiments de transfert de l'arrière vers l'avant, des compartiments de stockage avant et des compartiments de stockage arrière, les turbines étant disposées à la sortie de chaque compartiment de stockage et de larges clapets étant prévus au bout de chaque compartiment de transfert à l'entrée de chaque compartiment de stockage pour assurer toujours le même sens de rotation du liquide dans le circuit.

On comprend que le déplacement du liquide à l'intérieur du navire est déterminé par le tangage et qu'on a donc intérêt à donner à ce vaisseau une forme de carène facilitant le tangage mais évitant cependant l'enfournement sous les vagues. Pour cela, le fond du bateau est arrondi suivant un segment de cylindre de grand diamètre et la proue, comme la poupe possèdent un bon élancement.

Suivant une caractéristique secondaire, des citernes sont prévues à fond de cale, pour récupérer le liquide de travail, en cas d'interruption de fonctionnement. En effet, ce liquide pourrait être de l'eau de mer, auquel cas sa récupération ne présenterait aucun intérêt ; cependant, comme on le verra ci-après, on aurait intérêt à employer des liquides denses dont le prix n'est pas négligeable et qu'il faudrait récupérer.

Solution au problème, avantages et résultat industriel.

On comprend que le dispositif de l'invention utilise un vaisseau, c'est-à-dire un appareil dont on possède une grande expérience dans la pratique et que l'on peut concevoir

- 5 -

pour résister efficacement aux tempêtes. Le dispositif de l'invention utilise aussi des turbines ou des groupes bulbes qui sont largement connus. La nouveauté réside dans l'aménagement intérieur de la coque qui peut d'ailleurs se faire en utilisant des coques existantes que l'on récupère et que l'on modifie. Ces modifications sont à la portée de n'importe quel chantier naval. Les autres organes utilisés sont des clapets dont la technologie est largement connue mais qu'il faudra ici prévoir avec des dimensions importantes.

Cette invention sera mieux comprise à l'aide de la description ci-après qui en donne deux exemples non limitatifs de réalisation pratique et qui sont illustrés par les dessins joints.

Brève description des figures.

Dans ces dessins :

La figure 1 est une vue en élévation d'un vaisseau simple pris dans la houle.

La figure 2 est une vue schématique en coupe verticale longitudinale d'une autre version de vaisseau avec des cloches en proue et en poupe et avec des compartiments de machine au centre.

La figure 3 est une vue schématique coupée suivant un plan horizontal d'un vaisseau comme celui de la figure 3.

La figure 4 est une vue schématique du mouvement d'oscillation du vaisseau représenté à la figure 3.

La figure 5 est une représentation schématique du mouvement du vaisseau représenté à la figure 6.

La figure 6 est une vue schématique en coupe horizontale d'une deuxième version du vaisseau dans lequel on assigne au liquide d'entraînement des turbines un circuit.

La figure 7 est une coupe verticale d'un vaisseau équipé d'une masse de contrôle de l'amplitude du tangage.

La figure 8 est une vue schématique d'un compartiment à machines dans un premier sens d'écoulement du liquide. '

La figure 9 est une vue schématique du même compartiment de machines qu'à la figure 8 dans l'autre sens d'écoulement du liquide.

Description de quelques modes de réalisation.

On connaît des turbines travaillant sous une faible hauteur de chute en absorbant un grand débit avec de hauts rendements et qui entraînent des alternateurs avec une régularité suffisante.

L'ensemble est monté sur un bateau qui peut être un navire, un ponton ou un engin flottant quelconque. Il doit être puissant, solide, pouvant résister aux tempêtes les plus violentes et évoluer par ses propres moyens.

Il est mouillé, embossé avec touées longues, pour l'orienter, dans un site où la houle est constante et assez forte.

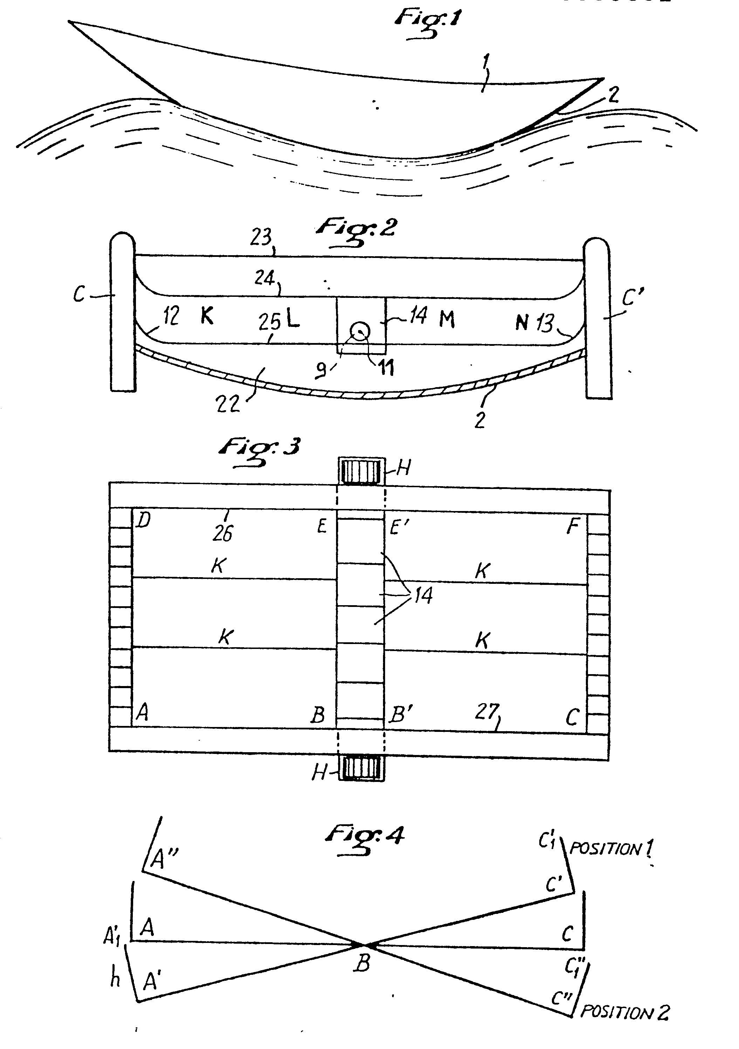

Il a des caractéristiques spécifiques variables suivant la houle qu'il a à connaître, mais en général et sans qu'elles soient limitatives, elles sont définies comme suit :
Le tangage normal, maximum d'un bateau est obtenu lorsque sa longueur, à la ligne de flottaison, est égale à la longueur d'onde de la houle. Mais celle-ci varie. Pour l'exploiter au mieux on prend une carène à forte tonture. Le fond est un segment de cylindre de grand diamètre, parallèle à la houle, il tangue sans contrainte. La courbe est telle qu'elle

0059652

peut épouser des houles de longueurs d'onde très différentes et ne rester qu'exceptionnellement en équilibre sur trois crêtes (figure 1).

La largeur du vaisseau est fonction de la puissance désirée. Il est conçu pour garder sa stabilité en toutes circonstances. Le centre de gravité est maintenu assez haut pour favoriser le tangage. La position peut être modifiée par ballast, pour augmenter ou diminuer la longueur du bateau à la ligne de flottaison suivant la houle. Dans les limites d'une stabilité parfaite, calculée avec charges mobiles, les oeuvres vives sont réduites. Les oeuvres mortes sont importantes, car le déplacement, en quelques secondes, du fluide moteur de plusieurs milliers de tonnes provoque un enfoncement important. Il doit se relever aisément et rapidement. Pour cela, et éviter d'enfoncer, on prolonge la proue et la poupe largement et à chacune de ses extrémités on fixe des cloches C, C' à air ouvertes en bas (qui restent toujours immergées). A chaque coup de tangage, la pression monte dans les cloches C, C' et suivant que l'on ferme ou qu'on ouvre les vannes d'aspiration ou de décharge, situées à la partie supérieure, on contrôle l'enfoncement et le relevage. La manoeuvre se fait automatiquement par tout ou rien sur un certain nombre de cloches représentées entre A et D ainsi qu'entre C et F (figure 3).

Le volume des cloches C, C' est calculé d'après la charge mobile du bateau.

L'aménagement intérieur comporte : (figure 2)
- un pont supérieur (23) avec tout le matériel de sécurité, de navigation, et de bonne tenue au mouillage.

- un ou plusieurs ponts intermédiaires (24), (25) supportant
les fluides moteurs, qui peuvent être différents. Le plus
haut (24) pourrait contenir de l'eau de mer à envoyer dehors
en cas de besoin. Un deuxième (25) contient un fluide dense
à récupérer dans des citernes (22) situées à fond de cale
et constituant ainsi un bon lest.

On prévoit, de chaque côté, une ou deux roues à aubes H,
actionnées par le courant marin et produisant de l'électricité pour les besoins du bord. Ces roues sont réversibles ;
devenues motrices, elles servent pour des déplacements
et évitages éventuels, notamment pour se placer face à
la houle.

On prévoit aussi au moins un propulseur de poupe susceptible
de faire éviter le vaisseau sur un bord ou sur l'autre.

Des cloisons longitudinales K empêchent un écoulement des
fluides sur le côté et le danger de gîte importante ou
chavirement.

Le fluide moteur se déplace donc de l'avant à l'arrière
et revient. Les roues ou les turbines peuvent être placées
au milieu de la salle (figure 3) ou aux extrémités (figure
6). (14) indique des compartiments à machines au milieu
de la salle.

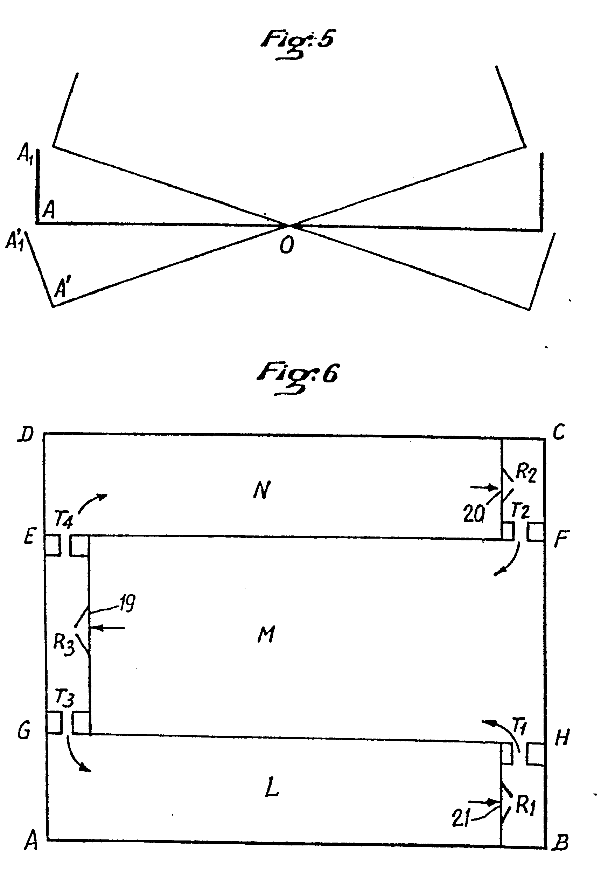

L'enfoncement étant du côté AD (figure 3), le liquide
occupe le volume A'A$_1$B/AD, position I à la figure 4. L'onde
arrivant, le liquide s'élève et coule dans l'espace C"C$_1$"B/CF
(Position 2 de la figure 4 et figure 3), en passant sur
l'espace BEB'E' où sont installés les compartiments (14)
des turbines (9). Il revient en position I et ainsi de
suite en actionnant les turbines (9) à chaque passage.

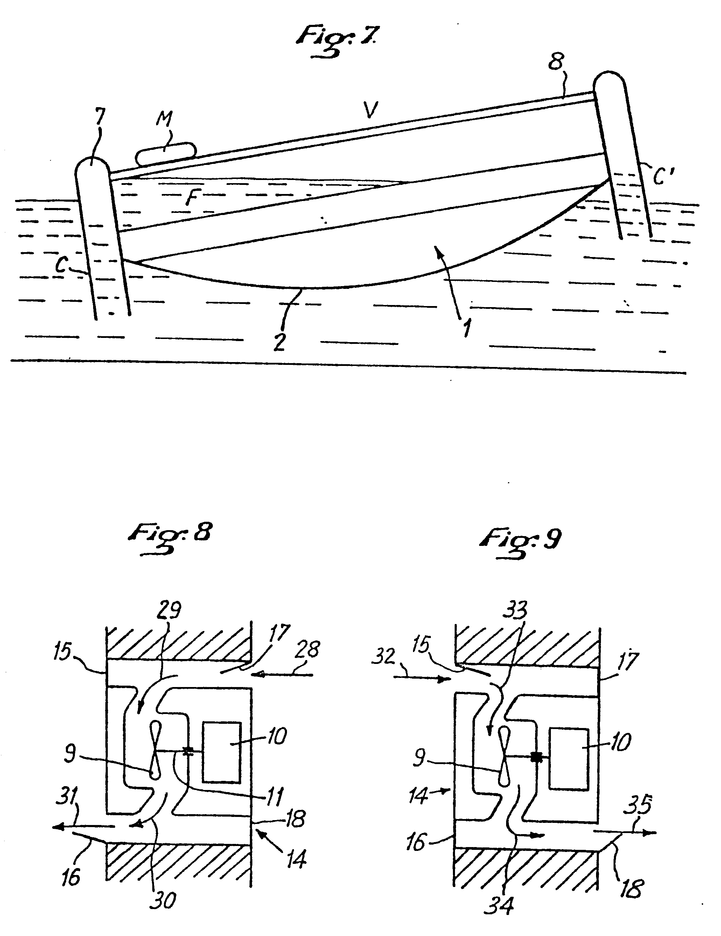

Pour mieux comprendre ce fonctionnement, on se reportera aux figures 8 et 9 et à ce qui suit.

Quand le côté de A est enfoncé, l'eau arrive suivant la flèche (28) (figure 8) en poussant le clapet (17) ouvert et en fermant les clapets (15) et (18). Elle passe donc, suivant la flèche (29), dans la turbine (9) qui entraîne la génératrice (10) par l'arbre (11). Elle s'échappe suivant les flèches (30) et (31) en ouvrant le clapet (16).

Quand le côté de B est enfoncé, l'eau arrive suivant la flèche (32) (figure 9) en poussant le clapet (15) à l'ouverture et en fermant les clapets (16) et (17). Elle passe donc, suivant la flèche (33), dans la turbine (9) qui entraîne la génératrice (10) par l'arbre (11). Elle s'échappe suivant les flèches (34) et (35) en ouvrant le clapet (18).

Les extrémités des planchers comportent des arrondis ou déflecteurs (12), (13) (figure 2) pour éviter le choc sur les murs et favoriser la montée. On augmente ainsi la hauteur de chute maximum "h". La hauteur de chute moyenne étant "h'".

La figure 3 schématise un niveau. C'est un rectangle, mais ce peut être un polygone - deux trapèzes unis par leur grande base, ou même un losange. Pour un même volume, le liquide s'élève plus haut en haut de course, il en résulte une vitesse plus grande à l'entrée des turbines. La valeur de "h" varie, mais plusieurs dispositifs simples et ceux déjà bien connus permettent de faire tourner les turbines toujours dans le même sens et de régulariser leurs vitesses pour entraîner directement des alternateurs. Cela peut se faire par éclusage et maintien d'une réserve de liquide en BEB'E' (figure 3).

On peut aussi placer les turbines près des extrémités de la salle (figure 6). Dans ce cas, la hauteur de chute est plus grande. La vitesse du fluide à l'entrée des turbines est plus élevée que dans le cas précédent, mais n'est pas le double, car "v" varie comme $\sqrt{h}$. Le trajet est plus long. Pour que les turbines soient alimentées régulièrement, on établit une réserve d'eau à chaque extrémité.

La salle est divisée en trois parties longitudinales L, M, N, pour équilibrer le bateau. L et N (latérales) ont la même largeur ; M (centrale) en a le double. Le fonctionnement est le suivant (figures 5 et 6).

Lorsque AD est dans un creux, $R_3$ est plein. Le fluide passe en L et N par les turbines $T_3$ et $T_4$.

L'onde suivante arrive, AD se lève, BC tombe dans le creux. $R_1$ et $R_2$ se remplissent par les clapets (20), (21), débitent sur les turbines $T_1$ et $T_2$. Le fluide passe en M. Ensuite BC se lève.

$R_3$ se remplit par le clapet (19) débite sur $T_1$ et $T_2$ et le cycle se poursuit.

Les réservoirs $R_1$, $R_2$, $R_3$ ne sont jamais complètement vides. Les écluses ou clapets (19), (20), (21) étant bien réglés, les turbines tournent normalement.

Sur le schéma, on a figuré quatre turbines en place. On peut en mettre beaucoup plus, deux ou trois par groupe, soit huit ou douze par ligne, suivant l'importance de fluide.

On peut aussi installer deux à trois lignes de turbines avec trois compartiments par ligne sur un bateau assez grand.

Quelques exemples chiffrés donnent une idée des puissances importantes que l'on peut obtenir et maîtriser par ce procédé.

I <u>Turbines au milieu de la salle.</u>

1° <u>exemple.</u>

<u>Figure 3</u> : AC = 60 m   AB = 25 m   AD = 60 m

houle : longueur d'onde 50 m, creux 4 m, période 6 secondes.

<u>Figure 4</u> : enfoncement $A'A'_1 = h = 8$ m.

Deux enfoncements par période, un à l'avant, un à l'arrière soit une toutes les trois secondes.

Le liquide occupe le volume : surface du triangle $A'A'_1B$, multiplié par la largeur AD. Soit : $SA'A'_1B \times AD =$

$\dfrac{25 \times 8 \times 60}{2} = 6000$ m3 déplacé en trois secondes soit par seconde 2000 m3.

Quand la proue se relève on admet que la hauteur moyenne $h'$ du liquide engendrant la vitesse soit égale à 4 mètres. C'est un minimum ; on l'adoptera dans tous les cas. Le fluide est de l'eau $d = 1$.

$v = \sqrt{2gh'}$     $h' = 4$     $v = 8,85$ m     $v2 = 78,48$ m

$P_1 = \dfrac{2\ 000\ 000 \times 1 \times 78,48}{2 \times 9,81} = 78,43$ MW

Si on emploie de l'eau de mer ($d = 1,025$)

$P_2 = 81,35$ MW

Si le fluide est de l'eau-mère de marais salants ($d = 1,320$)

$P_3 = 136,66$ MW

Si le fluide est une solution concentrée de $CO_3K_2$ ($d = 1,500$)

$P_4 = 176,5$ MW

II <u>Turbines aux extrémités de la salle</u>

<u>Exemple</u> (figures 5 et 6)

AB = 100 m

AD = 100 m

AG = 25 m

GE = 50 m

ED = 25 m

Le volume du liquide dans le compartiment L est égal à la surface A'A$_1$O x AG = 9375 m3 Même valeur pour le
compartiment Nsoit = 9375 m3 Total = 18750 m3 Longueur d'onde : 100 m creux : 5 m

Enfoncement A'A$_1'$ = h = 15 m

Période 10 secondes, une chute toutes les 5 secondes Débit par seconde 18 750 : 5 = 3750 m3 Déplacement 2 h soit 30 m h' = 15 v = 17 m v2 = 289 Le fluide est de l'eau.

$$P_1 = \frac{3\ 750\ 000 \times 1 \times 289}{2 \times 9,81} = 541,54 \text{ MW}$$

avec eau de mer (d = 1 025)

$P_2 = 576,20$ MW

avec eaux-mères de marais salants

d = 1,320

$P_3 = 959,70$ MW

avec solution concentrée de $CO_3K_2$

d = 1,500

$P_4 = 1239,54$ MW

Revendications du brevet

1. Dispositif permettant d'utiliser l'énergie de la houle
et des vagues à partir d'un vaisseau ancré qui possède
des moyens de production d'énergie et de transport de celle-ci
à la terre ferme, c a r a c t é r i s é par la combinaison :
a) d'un vaisseau ayant des caractéristiques appropriées
pour suivre les fréquences habituelles de la houle au lieu
d'ancrage considéré et constitué pour s'orienter face à
ladite houle pour tanguer et ne pas rouler grâce à des
moyens mécaniques l'y aidant ;
b) de moyens C, C', au moins à une extrémité du vaisseau,
destinés à modifier plus ou moins l'amplitude du tangagè ;
c) de compartiments étanches K, L, M, N, contenant un liquide
qui se déplace le long du vaisseau à la fréquence de tangage ;
d) de moyens, tels que des turbines (9) alimentées régulièrement, placées sur le trajet du liquide, aptes à en capter
l'énergie lorsqu'il se déplace, pour fournir une énergie
mécanique sur au moins un arbre tournant (11), énergie
qui peut être utilisée à entraîner au moins une génératrice
(10) électrique ;
e) de déflecteurs (12), (13), placés aux extrémités de
chaque compartiment étanche et conçus pour limiter le ressac
du liquide lorsque celui-ci arrive en fin de course de
descente au fond du compartiment.

2. Dispositif, tel que défini dans la revendication 1,
c a r a c t é r i s é par le fait que le vaisseau se place
convenablement face à la houle grâce à des propulseurs
latéraux à roues à aubes H.

3. Dispositif, tel que défini dans la revendication 1,

- 14 -

caractérisé par le fait que le vaisseau se place convenablement face à la houle grâce à des propulseurs de poupe qui poussent latéralement l'arrière du vaisseau vers babord ou tribord.

4. Dispositif, tel que défini dans la revendication 1, caractérisé par le fait que le vaisseau se place convenablement face à la houle grâce à un embossage convenable.

5. Dispositif, tel que défini dans la revendication 1, caractérisé par le fait que l'amplitude du tangage est contrôlée par des cloches C, C' disposées verticalement à l'avant et à l'arrière, dans la partie supérieure desquelles on contrôle la pression de l'air.

6. Dispositif, tel que défini dans la revendication 1, caractérisé par le fait que l'amplitude du tangage est contrôlée par une masse M se déplaçant de façon contrôlée de l'avant vers l'arrière et vice-versa.

7. Dispositif, tel que défini dans la revendication 1, caractérisé par le fait que les compartiments étanches K sont interrompus, vers le milieu du vaisseau, par des compartiments de machine (14) qui comportent au moins deux larges clapets (15), (16), (17), (18) en amont et en aval de chaque turbine (9) pour assurer un courant de liquide se déplaçant toujours dans le même sens sur la turbine (9) quel que soit le sens d'écoulement de liquide le long du vaisseau.

8. Dispositif, tel que défini dans la revendication 1, caractérisé par le fait que les compartiments étanches sont interrompus, vers le milieu du vaisseau, par une batterie de groupes-bulbes dont les pales changent d'orientation à chaque changement d'inclinaison du vaisseau.

9. Dispositif, tel que défini dans la revendication 1, c a r a c t é r i s é par le fait qu'on assigne au liquide d'entraînement des turbines un circuit passant dans : .

- des compartiments de transfert de l'avant vers l'arrière M,

- des compartiments de transfert de l'arrière vers l'avant N, L,

- des compartiments de stockage avant $R_3$,

- des compartiments de stockage arrière $R_1$, $R_2$,

les turbines $T_1$, $T_2$, $T_3$, $T_4$ étant disposées à la sortie de chaque compartiment de stockage $R_1$, $R_2$, $R_3$, et de larges clapets (19), (20), (21) étant prévus en bout de chaque compartiment de transfert N, M, L et à l'entrée de chaque compartiment de stockage $R_1$, $R_2$, $R_3$ pour assurer toujours le même sens de rotation du liquide dans le circuit.

10. Dispositif, tel que défini dans la revendication 1, c a r a c t é r i s é par le fait que le fond (2) du bateau (1) est arrondi suivant un segment de cylindre de grand diamètre et que la proue, comme la poupe, possède un bon élancement.

11. Dispositif, tel que défini dans la revendication 1, c a r a c t é r i s é par le fait que des citernes (22) sont prévues à fond de cale pour récupérer le liquide de travail en cas d'interruption de fonctionnement.

**Fig:1**

**Fig:2**

**Fig:3**

**Fig:4**

POSITION 1

POSITION 2

*Fig.5*

*Fig.6*

*Fig. 7.*

*Fig. 8*        *Fig. 9*

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendication concernée | |
| A | FR - A - 2 375 463 (SCARPI) <br> * Page 3, ligne 24 à page 8, ligne 4 * <br><br> -- | 1,4,6, 7 | F 03 B 13/12 |
| A | FR - A - 455 456 (McFARLAND) <br> * Page 1, ligne 31 à page 3, ligne 33 * <br><br> -- | 1,9,10 | |
| A | FR - A - 2 455 193 (RODRIQUEZ) <br> * Page 1, ligne 35 à page 5, ligne 4 * <br><br> -- | 1,4,6, 7,10, 11 | **DOMAINES TECHNIQUES RECHERCHES (Int. Cl. ³)** <br><br> F 03 B |
| A | GB - A - 557 049 (ROSENSTENGEL) <br> * Page 2, ligne 49 à page 3, ligne 59 * <br><br> ---- | 1,2,5, 6,9,11 | |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

| X | Le présent rapport de recherche a été établi pour toutes les revendications | | |
|---|---|---|---|
| **Lieu de la recherche** <br> La Haye | **Date d'achèvement de la recherche** <br> 03-06-1982 | **Examinateur** <br> DE WINTER | |

OEB Form 1503.1 06.78